# EUROPÄISCHE PATENTANMELDUNG

(11) **EP 1 987 987 A2**
(43) Veröffentlichungstag der Anmeldung: **05.11.2008**
(21) Anmeldenummer: 08007310.9
(22) Anmeldetag: 14.04.2008
(51) Int. Cl.: B60R 5/04

(54) **Abdeckungssystem für einen Heckstauraum eines Fahrzeugs**

(30) Priorität: 03.05.2007 DE 102007021428
(71) Anmelder: BOS GmbH & Co. KG, 73760 Ostfildern (DE)
(72) Erfinder: Seeg, Thomas, 73760 Ostfildern (DE)
(74) Vertreter: Wilhelm, Peter

(57) **Zusammenfassung**

Die Erfindung betrifft ein Abdeckungssystem für einen Heckstauraum (12) eines Fahrzeugs mit zwei im Wesentlichen parallel verlaufende Führungsschienen (50), die beidseitig des Heckstauraums (12) in Fahrzeugquerrichtung voneinander beabstandet anordenbar sind, und einem weitgehend formstabilen Abschlussflächenelement (40), welches beidseitig über Führungsvorrichtungen (42) verfügt, wobei die Führungsvorrichtungen (42) beweglich innerhalb der Führungsschienen angeordnet sind und eine Beweglichkeit des weitgehend formstabilen Abschlussflächenelements zwischen einer unteren und einer oberen Endlage entlang der Führungsschienen ermöglichen.

Erfindungsgemäß ist vorgesehen, dass zumindest ein Schwenkabschnitt (40) des Abschlussflächenelements (40) zumindest in der oberen Endlage nach unten verschwenkbar ausgebildet ist.

Verwendung insbesondere für Fahrzeug mit einem Abdeckungssystem mit elektrischer Komfortfunktion.

## Beschreibung

### Anwendungsgebiet und Stand der Technik

Die Erfindung betrifft ein Abdeckungssystem für einen Heckstauraum eines Fahrzeugs mit zwei im Wesentlichen parallel verlaufenden Führungsschienen, die beidseitig des Heckstauraums in Fahrzeugquerrichtung voneinander beabstandet anordenbar sind, und einem weitgehend formstabilen Abschlussflächenelement, welches beidseitig über Führungsvorrichtungen verfügt, wobei die Führungsvorrichtungen beweglich innerhalb der Führungsschienen angeordnet sind und eine Beweglichkeit des weitgehend formstabilen Abschlussflächenelements zwischen einer unteren und einer oberen Endlage entlang der Führungsschienen ermöglichen.

Gattungsgemäße Abdeckungssysteme werden in Fahrzeugen verwendet, um einen Heckstauraum zumindest abschnittsweise zu verschließen. Dies dient dem Sichtschutz, da durch das Abdeckungssystem verhindert wird, dass Gepäckstücke und ähnliches im Heckstauraum von außen einsehbar sind. Gattungsgemäße Abdeckungssysteme verfügen üblicherweise über ein flexibles Flächengebilde, welches zumeist von einer Rollowelle abziehbar ist und in einer ausgezogenen Funktionslage den größten Teil des Heckstauraums bedeckt. Heckseitig schließt sich an dieses flexibles Flächengebilde bei gattungsgemäßen Abdeckungssystemen das weitgehend formstabile Abschlussflächenelement an, welches üblicherweise als Konturteil ausgebildet ist und an die Kontur des Heckstauraums im Bereich einer Ladeklappe angepasst ist. Dieses formstabile Abschlussflächenelement ist über Führungsschienen, die beidseitig in den Seitenwandungen des Fahrzeugs vorgesehen sind, in der Höhe verschiebbar. Dies erlaubt es, das Abdeckungssystem in einem ausgezogenen Funktionszustand zu belassen und dennoch unproblematischen Zugang zu dem Gepäck unter dem weitgehend formstabilen Abschlussflächenelement und dem flexiblen Flächengebilde zu erhalten. Das weitgehend formstabile Abschlussflächenelement wird zu diesem Zweck mittels der Führungsvorrichtungen, die in den Führungsschienen angeordnet sind, bis in den Bereich eines Fahrzeughimmels nach oben verschoben.

Als problematisch wird angesehen, dass in dieser oberen Endlage bei entsprechendem Schienenverlauf ein Herausragen des Abschlussflächenelements aus dem Heckstauraum vorliegt. Beim Schließen der Ladeklappe können das Abschlussflächenelement und die Ladeklappe somit kollidieren, was zu einem Schaden am Abschlussflächenelement und/oder der Ladeklappe führen kann. Insbesondere kritisch ist dies im Hinblick auf Abdeckungssysteme, bei denen die vertikale Beweglichkeit des formstabilen Abschlussflächenelements automatisiert vonstatten geht, wobei das Abschlussflächenelement beim Öffnen der Ladeklappe automatisch nach oben fährt. Bei einem solchen System, welches für eine manuelle Handhabung beim Hochfahren und Herunterfahren des Abschlussflächenelements nicht gedacht ist, bedarf es einer gezielten Initiierung des Herabfahrens des weitgehend formstabilen Abschlussflächenelements, um erst anschließend die Ladeklappe schließen zu können.

### Aufgabe und Lösung

Aufgabe der Erfindung ist es daher, ein gattungsgemäßes Abdeckungssystem dahingehend weiterzubilden, dass die Gefahr einer Beschädigung des weitgehend formstabilen Abschlussflächenelements beim Schließen der Ladeklappe vermieden wird.

Erfindungsgemäß wird dies durch ein gattungsgemäßes Abdeckungssystem erreicht, welches dahingehend weitergebildet ist, dass zumindest ein Schwenkabschnitt des Abschlussflächenelements zumindest in der oberen Endlage nach unten verschwenkbar ausgebildet ist.

Unter der Verschwenkbarkeit nach unten wird im Zusammenhang mit dieser Erfindung verstanden, dass der Schwenkabschnitt dann, wenn das Abschlussflächenelement in seiner oberen Endlage ist, weiter nach unten weist als in dem Zustand, in dem das Abschlussflächenelement in seiner unteren Endlage ist. Durch das Verschwenken des Schwenkabschnitts nach unten wird erreicht, dass eine Ladeklappe geschlossen werden kann, ohne dabei Schaden an dem Schwenkabschnitt zu bewirken. Besonders bevorzugt ist es, wenn der Schwenkabschnitt durch das gesamte Abschlussflächenelement gebildet wird. Das Abschlussflächenelement kann in einem solchen Fall vollständig formstabil ausgebildet sein. Bei einer Ausführungsform mit einem separaten Schwenkabschnitt ist dieser formstabil ausgebildet und gegenüber einem zweiten Abschnitt des Abschlussflächenelements verschwenkbar. Der Schwenkabschnitt nimmt dabei vorzugsweise den überwiegenden Teil des Abschlussflächenelements ein.

Das Abdeckungssystem kann so ausgestaltet sein, dass der Schwenkabschnitt in der oberen Endlage ohne Kraftbeaufschlagung durch eine über das Eigengewicht des Schwenkabschnitts hinausgehende in Fahrzeughochrichtung wirkende Kraft nach unten verschwenkt wird. Bei einer solchen Ausgestaltung wird der Schwenkabschnitt in der oberen Endlage des Abschlussflächenelements gleichsam automatisch nach unten verschwenkt. Beim Schließen einer Ladeklappe kommt es dadurch nicht zu einer beschädigenden Kollision zwischen der Ladeklappe und dem Schwenkabschnitt. Diese Ausgestaltung kann dadurch realisiert werden, dass die Führungsschienen und die abschlussflächenelementseitigen Führungsvorrichtungen derart ausgebildet sind, dass sie in der Art einer Zwangsführung im Bereich der oberen Endlage ein Verschwenken verursachen.

Bei einer alternativen Ausgestaltung ist der Schwenkabschnitt in der oberen Endlage durch eine Kraftbeaufschlagung mit einer über das Eigengewicht des Schwenkabschnitts hinausgehenden in Fahrzeughochrichtung wirkenden Schwenkkraft nach unten verschwenkbar. Bei einer solchen Ausgestaltung ist der Schwenkabschnitt beim Fehlen einer Schwenkkraft im unverschwenkten Zustand, so dass er gegebenenfalls durch die geöffnete Ladeluke hinausragt. Erst durch Kraftbeaufschlagung mit der Schwenkkraft wird er nach unten weggeklappt. Diese Kraftbeaufschlagung erfolgt in der Einbausituation insbesondere durch die Ladeklappe selbst, die im Zuge des Schließens in Berührkontakt mit dem Schwenkabschnitt kommt und ihn dabei nach unten verschwenkt.

Bei einer darauf aufbauenden Ausgestaltung ist der Schwenkabschnitt in der oberen Endlage elastisch verschwenkbar, so dass die Verschwenkung nur für die Dauer der Kraftbeaufschlagung aufrechterhalten wird. Dies stellt eine besonders einfache Form der Realisierung einer Verschwenkbarkeit dar, da lediglich elastisches Auslenkmittel vorgesehen werden müssen, um die Verschwenkbarkeit des Schwenkabschnitts zu gewährleisten. Sobald die Schwenkkraft entfällt, beispielsweise beim Öffnen der Ladeklappe oder beim Absenken des formstabilen Abschlussflächenelements, gelangt der Schwenkabschnitt zurück in seine unverschwenkte Lage.

Bei einer Weiterbildung der Erfindung ist der Schwenkabschnitt nur in der oberen Endlage verschwenkt oder verschwenkbar. Dabei ist es bevorzugt, wenn der Schwenkabschnitt außerhalb der oberen Endlage horizontal ausgerichtet ist. Dies erlaubt es, den Schwenkabschnitt bis zur Überführung in die obere Endlage als Ablagefläche zu verwenden.

Bei einer Weiterbildung der Erfindung sind elastisch verformbare Verbindungsmittel zwischen dem Schwenkabschnitt des Abschlussflächenelements und einem nicht verschwenkbaren Abschnitt des Abschlussflächenelements vorgesehen. Diese elastisch verformbaren Verbindungsmittel gewährleisten die Verschwenkbarkeit und sind einfach zu realisieren. Im einfachsten Fall handelt es sich um einen oder mehrere Verbindungstege aus einem elastisch verformbaren Material wie beispielsweise Gummi. Ebenfalls zweckmäßig kann eine Verbindung zwischen dem Schwenkabschnitt und dem nicht verschwenkbaren Abschnitt über eine Scharnieranordnung sein, wobei zusätzlich ein Federelement vorgesehen ist, welches den Schwenkabschnitt außerhalb der oberen Endlage in seiner unverschwenkten Stellung hält. Dieses Federelement wird in der oberen Endlage beim Vorliegen einer Schwenkkraft bestimmungsgemäß elastisch verformt, um ein Verschwenken des Schwenkabschnitts zu gestatten.

Bei einer Weiterbildung der Erfindung sind die Führungsschienen und die Führungsvorrichtung derart aufeinander abgestimmt, dass das Abschlussflächenelement in der oberen Endlage verschwenkt wird. Bei dieser Ausgestaltung wird demnach durch die Formgebung der Führungsmittel im Bereich der oberen Endlage erreicht, dass das Abschlussflächenelement in der oberen Endlage unabhängig vom Öffnungszustand der Ladeklappe stets automatisch den verschwenkte Zustand einnimmt. Denkbare Ausgestaltungen sehen vor, dass beispielsweise durch eine sich in Richtung der oberen Endlage ändernde Beabstandung der Führungsschienen voneinander in Fahrzugquerrichtung die Führungsvorrichtungen bei einer Bewegung in Richtung der oberen Endlage aufeinander zu gedrückt werden und über eine Kulissenführung die Schwenkmittel des Abschlussflächenelements erfindungsgemäß beeinflussen. Alternativ können Führungsschienen vorgesehen werden, die sich im Bereich der oberen Endlage aufweiten, so dass sich die Führungsvorrichtungen, die im Bereich der unteren Endlage durch die Führungsschienen hinsichtlich ihrer Ausrichtung zwangsgeführt sind, in diesem oberen Bereich in begrenztem Maße verdrehen können, so dass das Abschlussflächenelement sich durch seine Gewichtskraft in einer verschwenkte Stellung verlagert. Ebenfalls zweckmäßig kann die Verwendung von Führungsschienen mit jeweils zwei Führungsspuren sein, wobei jede Führungsvorrichtung mit jeweils zwei Gleitsteinen in die Führungsschienen eingreifen, so dass die Winkelstellung des gesamten formstabilen Abschlussflächenelements für jede Lage des formstabilen Abschlussflächenelements durch die Relativlage der Gleitsteine zueinander gezielt beeinflusst werden kann.

Bei einer Weiterbildung der Erfindung sind die Führungsschienen und/oder Führungsvorrichtungen abschnittsweise derart elastisch verformbar, dass das Abschlussflächenelement in der oberen Endlage verschwenkbar ist. Bei dieser Ausgestaltung sind vorzugsweise in den Führungsschienen Abschnitte vorgesehen, die beim Nichtvorliegen einer auf das Abschlussflächenelement wirkenden Schwenkkraft die Führungsvorrichtungen in einer ersten Stellung halten und die beim Vorliegen einer Schwenkkraft durch die Führungsvorrichtungen ausgelenkt werden und dadurch eine Schwenkbewegung der Führungsvorrichtungen zulassen, die sich in einem Verschwenken des Abschlussflächenelements niederschlägt.

Dies kann insbesondere derart ausgestaltet sein, dass die Führungsschienen zumindest in einem Bereich, in dem sich die Führungsvorrichtungen befinden, wenn das Abschlussflächenelement in seiner oberen Endlage ist, elastisch auslenkbare Abschnitte aufweisen, vorzugsweise einstückig mit den Führungsschienen verbundene Federlaschen.

Die Erfindung betrifft weiterhin eine Führungsschiene in einem Abdeckungssystem in einem Fahrzeug, insbesondere zur Verwendung in einem Abdeckungssystem nach einem der vorstehenden Ansprüche, mit einer ersten Führungsspur zur Aufnahme eines in der ersten Führungsspur beweglichen ersten Führungskörpers. Erfindungsgemäß ist an dieser gattungsgemäßen Führungsschiene eine zweite Führungsspur zur Aufnahme eines zweiten in der zweiten Führungsspur beweglichen Führungskörpers vorgesehen, wobei die zweite Führungsspur gegenüber der ersten Führungsspur in einer Versatzrichtung quer zu den Führungsspuren versetzt ist und die erste Führungsspur und die zweite Führungsspur bezogen auf eine sich senkrecht zur Versatzrichtung erstreckende Ebene zumindest abschnittsweise einen unterschiedlichen Verlauf aufweisen.

Durch eine solche Gestaltung mit zwei Führungsspuren, in die jeweils ein Führungskörper eingreift, ist eine definierte Führungscharakteristik eines durch die Führungskörper geführten Bauteils, insbesondere des formstabilen Flächenteils, gewährleistet. Die Führungsschiene ist nicht nur für die Position der Führungskörper bestimmend, sondern auch für die Ausrichtung eines mit beiden Führungskörpern verbundenen Bauteils, da sich durch die unterschiedlichen Führungsspuren der Weg der Führungskörper in der Führungsschiene separat gezielt festlegen lässt. Die Führungsspuren erstrecken sich in zueinander parallelen Ebenen, vorzugsweise in unterschiedlichen Ebenen. Die Versatzrichtung, die im Wesentlich senkrecht auf diesen Ebenen steht, entspricht vorzugsweise einer Fahrzeugquerrichtung.

Die Führungsspuren sind vorzugsweise in Versatzrichtung unmittelbar benachbart zueinander. Dadurch können auch die Führungskörper unmittelbar ineinander übergehen, so dass sich der zweite Führungskörper unmittelbar an den ersten anschließt. Insbesondere bevorzugt ist es, wenn die Führungsspuren durch ein gemeinsames einstückiges Führungsschienenbauteil begrenzt werden. Dies führt zu einer sehr einfachen Montage und zur Vermeidung von unerwünschten Lageabweichungen zwischen den beiden Führungsspuren.

Bei einer Weiterbildung der erfindungsgemäßen Führungsschienen verlaufen diese über ihre gesamte Länge parallel zueinander. Bei einer solchen Ausgestaltung wird erreicht, dass auch die Führungskörper unabhängig von ihrer Position in den Führungsspuren stets zueinander die gleiche Relativlage einnehmen. Dies gestattet es, an den Führungskörpern ein entlang der Führungsschiene bewegliches Bauteil vorzusehen, welches unabhängig von seiner Lage stets die gleiche Ausrichtung, insbesondere eine horizontale Ausrichtung, aufweist. Bei einer Verwendung einer erfindungsgemäßen Führungsschiene in einem erfindungsgemäßen Abdeckungssystem wäre eine solche Gestaltung mit parallelen Führungsspuren insbesondere in Verbindung mit einem weitgehend formstabilen Abschlussflächenelement zweckmäßig, das über einen nichtschwenkbaren und einen relativ dazu schwenkbaren Schwenkabschnitt verfügt.

Bei einer anderen Ausgestaltung ist eine der Führungsspuren durch einen elastisch auslenkbaren Abschnitt begrenzt, der so angeordnet ist, dass er durch den zugeordneten Führungskörper auslenkbar ist. Bei dieser Gestaltung unterscheidet sich der Verlauf der Führungsspuren demnach zumindest dadurch, dass eine der Führungsspuren zumindest im Zustand mit ausgelenktem Abschnitt einen von der anderen Führungsspur abweichenden Verlauf aufweist. Die elastische Gestaltung sorgt dabei dafür, dass erst im Falle des Auftretens externer, auf die Führungskörper wirkende Kräfte der auslenkbare Abschnitt seine ausgelenkte Lage einnimmt. Dies erlaubt beispielsweise ein Ausweichen eines mit den Führungskörpern verbundenen Bauteils, insbesondere des formstabilen Abschlusselements, um eine Beschädigung zu vermeiden.

Bei einer Weiterbildung der Erfindung weist eine Führungsspur einen aufgeweiteten Abschnitt auf, vorzugsweise an einem Ende der Führungsspur. Sobald sich der zugeordnete Führungskörper in diesem aufgeweiteten Abschnitt befindet, hat er im begrenztem Maße Spiel, wodurch eine Verschwenkung des mit den Führungskörpern verbundenen Bauteils um eine durch den anderen Führungskörper definierte Achse möglich ist. Je nach Ausgestaltung des mit den Führungskörpern verbundenen Bauteils kommt es dabei unter dem Einfluss der Gewichtskraft des Bauteils auch zu einem automatischen Verschwenken.

Eine gattungsgemäße Führungsschiene kann weiterhin auch so ausgebildet sein, dass die Führungsschiene einen elastisch auslenkbaren Abschnitt aufweist, der so angeordnet ist, dass der erste Führungskörper im Bereich des auslenkbaren Abschnitts gegen eine Federkraft um eine senkrecht zu einer Erstreckungsrichtung der ersten Führungsspur verlaufende Drehachse drehbar ist.

Die Erfindung betrifft darüber hinaus ein Fahrzeug mit einem Heckstauraum, wobei im Heckstauraum ein Abdeckungssystem vorgesehen ist, welches in oben beschriebener Art ausgebildet ist. Bei einer besonderen Ausgestaltung ist das Abdeckungssystem so angeordnet, dass das formstabile Abschlussflächenelement in seiner oberen Endlage in Berührkontakt mit einer Ladeklappe des Fahrzeugs ist.

### Kurzbeschreibung der Zeichnungen

Weitere Vorteile und Merkmale der Erfindung ergeben sich aus den Ansprüchen sowie der nachfolgenden Beschreibung von bevorzugten Ausführungsbeispielen der Erfindung, die anhand der Zeichnungen dargestellt sind. Dabei zeigt:
- Fig. 1: den Heckbereich eines Fahrzeugs mit einem erfindungsgemäßen Abdeckungssystem ,
- Fig. 2a uns 2b: eine zweite Ausgestaltung eines erfindungsgemäßen Abdeckungssystems,
- Fig. 3a und 3b: eine dritte Ausführungsform eines erfindungsgemäßen Abdeckungssystems,
- Fig. 4a und 4b: eine vierte Ausführungsform eines erfindungsgemäßen Abdeckungssystems,
- Fig. 5a und 5b: eine fünfte Ausführungsform eines erfindungsgemäßen Abdeckungssystems und

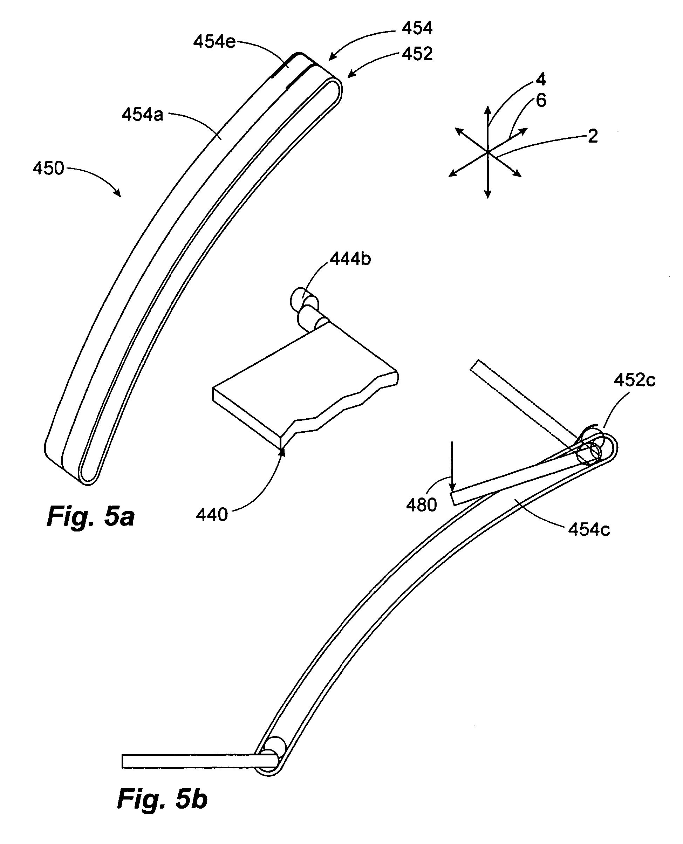

- Fig. 5a und 5b: eine sechste Ausführungsform eines erfindungsgemäßen Abdeckungssystems.

### Detaillierte Beschreibung der Ausführungsbeispiele

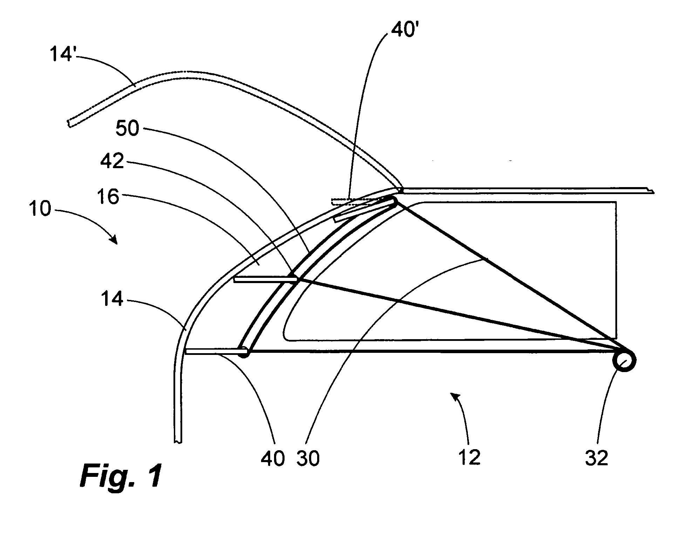

Fig. 1 zeigt den Heckbereich 10 eines Kraftfahrzeugs in einer schematischen Seitenansicht. Ein Heckstauraum 12 des Fahrzeugs ist über eine Ladeklappe 14 zugänglich. Der geöffnete Zustand 14' der Ladeklappe 14 ist gestrichelt dargestellt. Im Heckstauraum 12 ist ein Abdeckungssystem vorgesehen, welches in verschiedenen Zuständen dargestellt ist. Dieses Abdeckungssystem verfügt zum Zwecke des Sichtschutzes über ein flexibles Flächengebilde 30, welches von einer Rollowelle 32 abrollbar ist, sowie über ein formstabilen Abschlussflächenelement 40, der sich am hinteren Ende an das flexible Flächengebilde 30 anschließt. Das formstabile Abschlussflächenelement 40 ist in Fahrzeugquerrichtung beiderseitig mit angeformten Führungsvorrichtungen 42 versehen, die in zwei ebenfalls beidseitig des Laderaums angeordnete Führungsschienen 50 eingreifen. Die Ausgestaltung der Führungsvorrichtungen 42 und der Führungsschienen 50 ist bei Fig. 1 aus Gründen der Übersichtlichkeit nicht dargestellt. Deren konkrete Ausgestaltung kann einer der Ausführungsformen der nachfolgenden Figuren entsprechen.

Das formstabile Abschlussflächenelement 40 ist über die Führungsvorrichtungen 42 entlang einer D-Säule 16 des Fahrzeugs beweglich. Ein nicht näher dargestellter Mechanismus sorgt dabei dafür, dass das Abschlussflächenelement 40 unabhängig von seiner Lage stets in etwa horizontal gehalten wird. So kann das Abschlussflächenelement 40 zwischen einer unteren Endlage, in der es zusammen mit dem flexiblen Abschlussflächenelement 30 eine weitgehend einheitliche horizontale Fläche bildet, und einer oberen Endlage, in der das Abschlussflächenelement 40 in der Nähe des Dachhimmels angeordnet ist, verschoben werden.

Während das Abschlussflächenelement 40 in seiner unteren Endlage und einer auf dem Weg zur oberen Endlage vorgesehenen Zwischenlage horizontal ausgerichtet sein kann, ohne mit der Ladeklappe 14 zu kollidieren, ragt das formstabile Abschlussflächenelement 40 in seiner oberen Endlage aus der Ladeluke des Fahrzeug heraus, wie die gestrichelte Darstellung 40' verdeutlicht. Um keine Beschädigung im Zuge des Schließens der Ladeklappe 14 zu riskieren, ist das formstabile Abschlussflächenelement elastisch auslenkbar. Bei geschlossener Ladeklappe 14 wird das Abschlussflächenelement 40 daher nach unten ausgelenkt und nimmt die dargestellte Lage ein.

Die dargestellte Gestaltung erlaubt es, das Abdeckungssystem vergleichsweise weit hinten im Wagen vorzusehen und keine besonderen Maßnahmen treffen zu müssen, um eine Beschädigung des Abschlussflächenelements 40 zu vermeiden. Dieser wird beim Schließen der Ladeklappe 14 automatisch verschwenkt. Besonders vorteilhaft ist dies bei elektrisch angetriebenen Systemen, die in Abhängigkeit des Öffnungszustandes der Ladeklappe 14 automatisiert hoch- und herunterfahren.

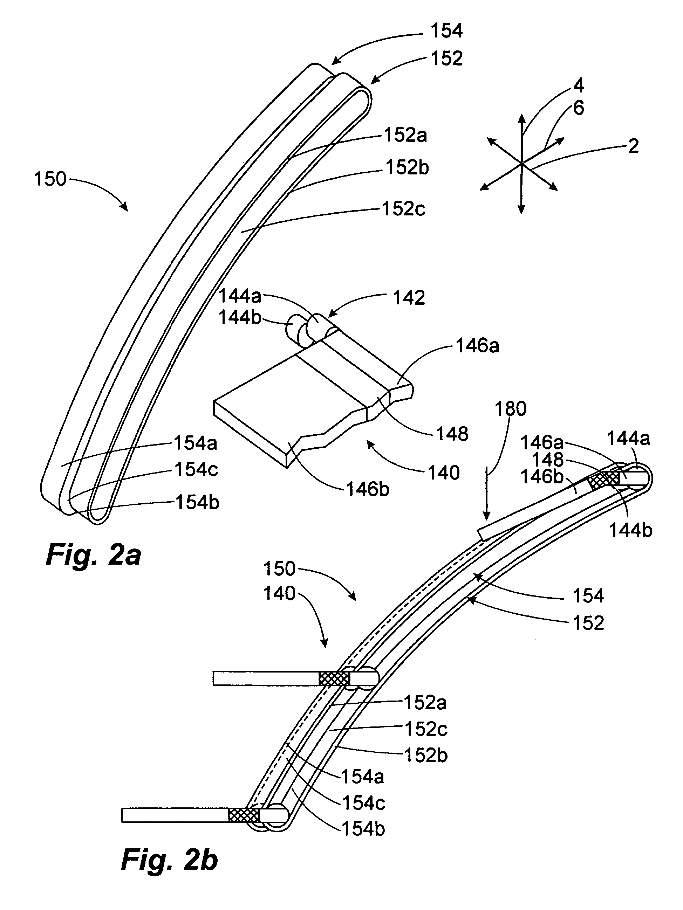

Die Fig. 2a und 2b zeigen eine zweite Ausführungsform eines erfindungsgemäßen Abdeckungssystems in einer detaillierteren Ansicht. Dabei ist, ebenso wie bei den nachfolgenden Ausführungsformen erfindungsgemäßer Abdeckungssysteme, jeweils nur eine Seite des symmetrisch aufgebauten Abdeckungssystems dargestellt.

Diese zweite Ausführungsform eines erfindungsgemäßen Abdeckungssystems weist eine Führungsschiene 150 auf, die zur Anordnung insbesondere in einer D-Säule eines Fahrzeugs vorgesehen ist. Die Führungsschiene 150 verfügt über einen bezogen auf den Heckstauraum innenliegenden Führungsschienenabschnitt 152 sowie einen außenliegenden Führungsschienenabschnitt 154. Die beiden Führungsschienenabschnitte 152, 154 sind Teil eines einstückigen Bauteils und grenzen unmittelbar aneinander an. Der innere Führungsschienenabschnitt 152 weist eine obere und eine untere Führungswandung 152a, 152b auf. Die beiden Führungswandungen begrenzen die dazwischenliegende Führungsspur 152c. Der erste Führungsschienenabschnitt 152 weist keine rückwärtige Wandung auf. Stattdessen schließt sich unmittelbar der zweite Führungsschienenabschnitt 154 an, der ebenfalls zwei Führungswandungen 154a, 154b aufweist, die eine Führungsspur 154c definieren. Die beiden Führungsspuren 152c, 154c weisen eine identische Formgebung auf, sind jedoch gegeneinander in einer durch die Fahrzeughochrichtung 4 und die Fahrzeuglängsrichtung 6 aufgespannten Ebene parallel verschoben.

In die Führungsschiene 150 ist ein Abschlussflächenelement 140 eingesetzt, der sich über die Breite des Heckstauraums erstreckt. Beidseitig sind am dem Abschlussflächenelement Führungsvorrichtungen 142 vorgesehen. Jede Führungsvorrichtungen 142 umfasst zwei starr miteinander und mit dem Abschlussflächenelement 140 verbundene Führungskörper 144a, 144b. Diese sind zur Aufnahme in den Führungsspuren 152c, 154c vorgesehen, in denen sie jeweils durch die Führungswandungen 152a, 152b, 154a, 154b geführt werden. Dabei ist der außenseitige zweite Führungskörper 144b gegenüber dem innenseitigen Führungskörper 144a versetzt angeordnet, wobei der Versatz mit dem Parallelversatz des ersten Führungsschienenabschnitts 152 gegenüber dem zweiten Führungsschienenabschnitt 154 identisch ist. Das Abschlussflächenelement 140 selbst verfügt über einen starr mit den Führungsvorrichtungen 142 verbundenen Abschnitt 146a, einen daran angrenzenden elastischen Verbindungsabschnitt 148 sowie einem mit dem Verbindungsabschnitt 148 verbundenen Schwenkabschnitt 146b.

Durch den identischen Versatz der Führungskörper 144a, 144b einerseits und der Führungsschienenabschnitte 152, 154 andererseits wird erreicht, dass stets eine horizontale Ausrichtung des Abschlussflächenelements 140 unabhängig von dessen Lage innerhalb der Führungsschienen 150 erzielt wird. Dies gilt zumindest für die Führungsvorrichtungen 142 und den starr damit verbundenen Abschnitt 146a. Allerdings kann der Schwenkabschnitt 146b gegenüber dem starren Abschnitt 146a wegen des elastischen Verbindungsabschnitts 148 ausgelenkt werden. Sobald eine Kraft 180, insbesondere ausgehend von einer Ladeklappe, auf den Schwenkabschnitt 146b wirkt, wird dieser bei gleichzeitiger elastischer Verformung des Verbindungsabschnitts 148 ausgelenkt, so dass er ohne Beschädigung in eine Lage gebracht werden kann, in der er einem Schließen der Ladeklappe nicht entgegensteht.

Die nachfolgenden Ausführungsformen sind ähnlich aufgebaut. Es werden im Folgenden daher insbesondere die Unterschiede zur Ausführungsform der Fig. 2a und 2b erläutert.

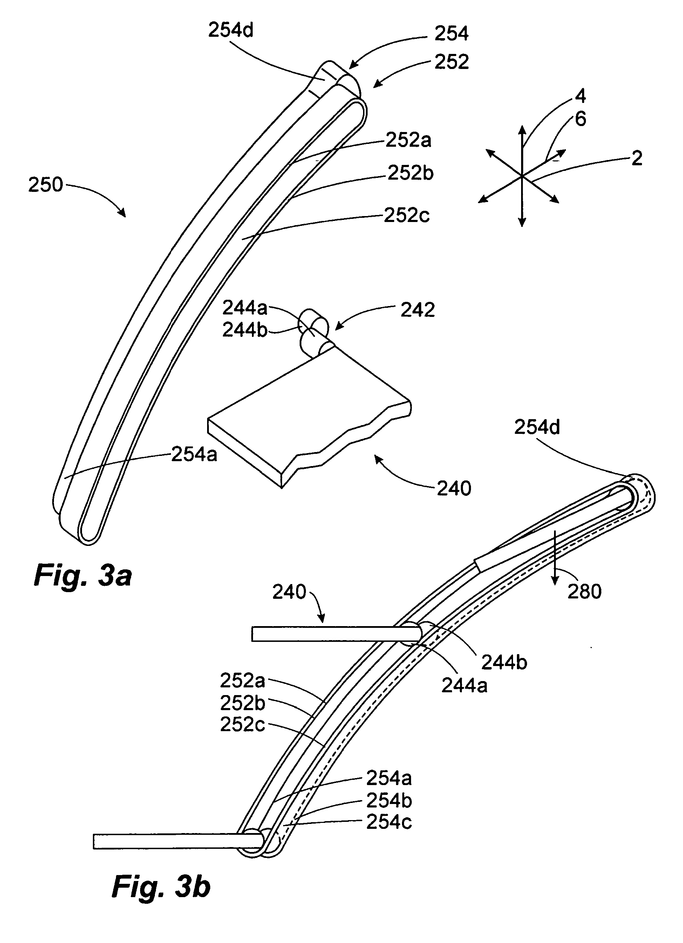

Bei der Ausführungsform der Fig. 3a und 3b ist wiederum eine Führungsschiene 250 vorgesehen, die zwei Führungsschienenabschnitte 252, 254 aufweist. Diese weisen wiederum jeweils zwei begrenzende Wandungen 252a, 252b, 254a, 254b auf, die jeweils eine Führungsspur 252c, 254c begrenzen und definieren. Die Führungsspuren 252c, 254c sind wieder über einen weiten Teil parallel zueinander verlaufend ausgebildet. In einem oberen Endbereich ist die außenliegende Führungsspur 254c jedoch durch eine Ausbuchtung 254d in der oberen Führungswandung 254a aufgeweitet. Das Abschlussflächenelement 240 entspricht ebenfalls weitgehend dem Abschlussflächenelement 140 der Ausführungsform der Fig. 2a und 2b. Allerdings ist er abweichend von dieser ersten Ausführungsform vollständig formstabil ausgebildet. Wiederum sind beiderseitig am Abschlussflächenelement 240 Führungsvorrichtungen 242 vorgesehen, die aus jeweils zwei Führungskörpern 244a, 244b bestehen, die starr miteinander und mit dem Abschlussflächenelement 240 verbunden sind.

Wie bei der Ausführungsform der Fig. 2a und 2b sorgt auch bei dieser Ausführungsform die Gestaltung der zueinander über weite Strecken parallelen Führungsspuren 252c, 254c verbunden mit der entsprechenden Gestaltung der Führungskörper 244a, 244b dafür, dass das Abschlussflächenelement 240 bei der Bewegung aus seiner unteren Endlage heraus in einer horizontalen Ausrichtung verbleibt. Wenn das Abschlussflächenelement 240 die obere Endlage erreicht, kann der äußere Führungskörper 244b allerdings in die Ausbuchtung 254d hineingleiten.

Dies geschieht aufgrund der Gewichtskraft 280 des Abschlussflächenelements 240. Die Führungskörper nehmen in der oberen Endlage dadurch eine in Fahrzughochrichtung 4 voneinander abweichende Lage ein, so dass das Abschlussflächenelement 240 in seiner oberen Endlage eine nach unten abgeklappte Schwenkstellung einnimmt, die einem Schließen einer Ladeklappe nicht entgegensteht.

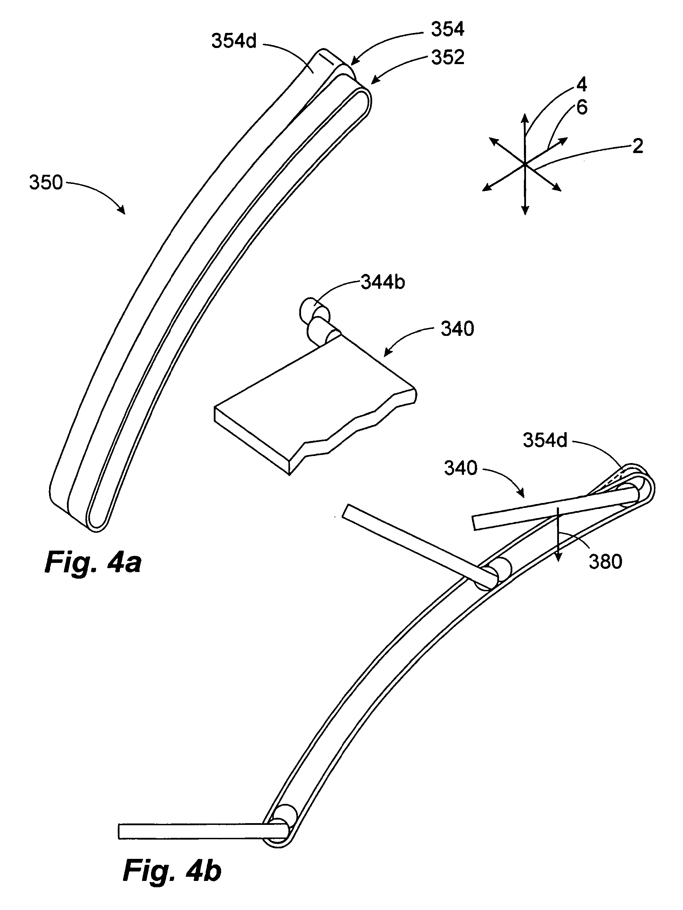

Die Ausführungsform der Fig. 4a und 4b entspricht weitgehend der Ausführungsform der Fig. 3a und 3b. Abweichend hiervon weisen die beiden Führungsspurabschnitte 352, 354 der Führungsspur 350 jedoch über weite Strecken einen übereinstimmenden Verlauf auf. Erst im dem oberen Endbereich weichen die Verläufe voneinander ab, da wiederum der außengelegene Führungsschienenabschnitt 354 eine Ausbuchtung 354d aufweist, die in der oberen Endlage des Abschlussflächenelements 340 ein Abklappen des Abschlussflächenelements 340 aufgrund seiner Gewichtskraft 380 bewirkt. Ein Unterschied zwischen der Ausführungsform der Fig. 3a und 3b einerseits und der Ausführungsform der Fig. 4a und 4b andererseits liegt darin, dass durch den über weite Strecken identischen Verlauf des inneren und des äußeren Führungsschienenabschnitts 354, 352 das Abschlussflächenelement 340 bei der Überführung in seine obere Endlage zunächst nach oben verschwenkt wird, bis er in den Bereich gelangt, in dem der Führungskörper 344b in den Bereich der Ausbuchtung 354d gleitet.

Die Ausführungsform der Fig. 5a und 5b ist wiederum ähnlich aufgebaut. Wiederum weist die Führungsschiene 450 zwei Führungsschienenabschnitten 452, 454 auf. Die durch die Führungsschienenabschnitte 452, 454 jeweils definierten Führungsspurverläufe unterscheiden sich dabei lediglich dadurch, dass der Führungsspurverlauf des äußeren Führungsschienenabschnitts 454 wie auch bei der Ausführungsform der Fig. 4a und 4b aufgeweitet ist. Dies wird allerdings nicht durch eine starre Ausbuchtung in der Wandung 454a des äußeren Führungsschienenabschnitts 454 bewirkt, sondern durch eine elastisch auslenkbare Lasche 454e, die einstückig am hinteren Führungsschienenabschnitt 454 befestigt ist. Diese elastisch auslenkbare Lasche 454e wird vom äußeren Führungskörper 444b ausgelenkt, sobald das Abschlussflächenelement 440 durch eine ausreichend große Schwenkkraft 480 nach unten kraftbeaufschlagt wird. Somit ist auch bei dieser Ausführungsform gewährleistet, dass das Abschlussflächenelement 440 beim Schließen einer Ladeklappe bestimmungsgemäß ausgelenkt werden kann, um eine Beschädigung an dem Abschlussflächenelement 440 oder der Heckraumklappe zu vermeiden.

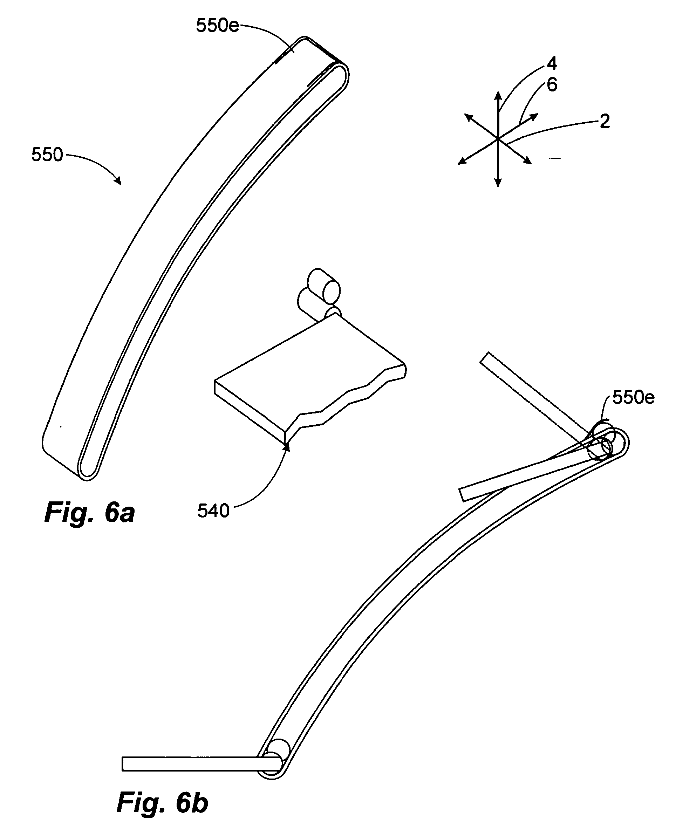

Die Ausführungsform der Fig. 6a, 6b umfasst eine Führungsschiene 550, die anders als die Führungsschienen der vorbeschriebenen Ausführungsformen nicht zweiteilig ausgebildet ist. Im oberen Endbereich ist in dieser Schiene eine elastisch auslenkbare Lasche 550e vorgesehen, die in ähnlicher Art und Weise wie bei der Ausführungsform der Fig. 5a und 5b eine Auslenkung des Abschlussflächenelements 540 gestattet.

## Patentansprüche

1. Abdeckungssystem für einen Heckstauraum (12) eines Fahrzeugs mit
- zwei im Wesentlichen parallel verlaufende Führungsschienen (50; 150; 250; 350; 450; 550), die beidseitig des Heckstauraums (12) in Fahrzeugquerrichtung (2) voneinander beabstandet anordenbar sind, und
- einem weitgehend formstabilen Abschlussflächenelement (40; 140; 240; 340; 440; 540), welches beidseitig über Führungsvorrichtungen (42; 142; 242) verfügt,
wobei
die Führungsvorrichtungen (42; 142; 242) beweglich innerhalb der Führungsschienen angeordnet sind und eine Beweglichkeit des weitgehend formstabilen Abschlussflächenelements zwischen einer unteren und einer oberen Endlage entlang der Führungsschienen ermöglichen,
**dadurch gekennzeichnet, dass**
zumindest ein Schwenkabschnitt (40; 146b; 240; 340; 440; 540) des Abschlussflächenelements (40; 140; 240; 340; 440; 540) zumindest in der oberen Endlage nach unten verschwenkbar ausgebildet ist.

2. Abdeckungssystem nach Anspruch 1,
**dadurch gekennzeichnet, dass**
der Schwenkabschnitt (240; 340) in der oberen Endlage ohne Kraftbeaufschlagung durch eine über das Eigengewicht (280; 380) des Schwenkabschnitts hinausgehende in Fahrzeughochrichtung (4) wirkenden Kraft nach unten verschwenkt wird.

3. Abdeckungssystem nach Anspruch 1,
**dadurch gekennzeichnet, dass**
der Schwenkabschnitt (40; 146b, 440; 540) in der oberen Endlage durch eine Kraftbeaufschlagung mit einer über das Eigengewicht des Schwenkabschnitts hinausgehenden in Fahrzeughochrichtung wirkenden Schwenkkraft (180; 480) nach unten verschwenkbar ist.

4. Abdeckungssystem nach Anspruch 3,
**dadurch gekennzeichnet, dass**
der Schwenkabschnitt (40; 146b, 440; 540) in der oberen Endlage elastisch verschwenkbar ist, so dass die Verschwenkung nur für die Dauer der Kraftbeaufschlagung aufrechterhalten wird.

5. Abdeckungssystem nach einem der vorstehenden Ansprüche,
**dadurch gekennzeichnet, dass**
der Schwenkabschnitt (240) nur in der oberen Endlage verschwenkt oder verschwenkbar ist.

6. Abdeckungssystem nach einem der vorstehenden Ansprüche,
**gekennzeichnet durch**
elastisch verformbare Verbindungsmittel (148) zwischen dem Schwenkabschnitt (146b) des Abschlussflächenelements (140) und einem nicht verschwenkbaren Abschnitt (146a) des Abschlussflächenelements (140).

7. Abdeckungssystem nach einem der vorstehenden Ansprüche,
**dadurch gekennzeichnet, dass**
die Führungsschienen (50; 250; 350) und die Führungsvorrichtungen (42; 242) derart aufeinander abgestimmt sind, dass das Abschlussflächenelement (40; 240; 340) in der oberen Endlage verschwenkt wird.

8. Abdeckungssystem nach einem der vorstehenden Ansprüche,
**dadurch gekennzeichnet, dass**
die Führungsschienen (450; 550) und/oder Führungsvorrichtungen zumindest abschnittsweise derart elastisch verformbar sind, dass das Abschlussflächenelement (440; 540) in der oberen Endlage verschwenkbar ist.

9. Abdeckungssystem nach Anspruch 8,
**dadurch gekennzeichnet, dass**
die Führungsschienen (450; 550) zumindest in einem Bereich, in dem sich die Führungsvorrichtungen befinden, wenn das Abschlussflächenelement (440; 450) in seiner oberen Endlage ist, elastisch auslenkbare Abschnitte (454e, 550e) aufweisen, vorzugsweise einstückig mit den Führungsschienen (450, 550) verbundene Federlaschen (454e, 550e).

10. Führungsschiene (150; 250; 350; 450) für ein Abdeckungssystem in einem Fahrzeug, insbesondere zur Verwendung in einem Abdeckungssystem nach einem der vorstehenden Ansprüche, mit einer ersten Führungsspur (152c; 252c) zur Aufnahme eines in der ersten Führungsspur beweglichen ersten Führungskörpers (144a, 244a),
**gekennzeichnet durch**
eine zweite Führungsspur (154c; 254c; 454c) zur Aufnahme eines zweiten in der zweiten Führungsspur beweglichen Führungskörpers (144b, 244b, 344b), wobei
- die zweite Führungsspur gegenüber der ersten Führungsspur in einer Versatzrichtung (2) quer zu den Führungsspuren versetzt ist und
- die erste Führungsspur und die zweite Führungsspur bezogene auf eine sich senkrecht zur Versatzrichtung erstreckenden Ebene zumindest abschnittsweise einen unterschiedlichen Verlauf aufweisen.

11. Führungsschiene nach Anspruch 10,
**dadurch gekennzeichnet, dass**
die Führungsspuren (152c; 252c; 452c; 154c; 254c; 454c) in Versatzrichtung (2) unmittelbar benachbart sind, wobei sie vorzugsweise durch ein gemeinsames einstückiges Führungsschienenbauteil begrenzt werden.

12. Führungsschiene nach Anspruch 11,
**dadurch gekennzeichnet, dass**
die Führungsspuren (152c, 154c) über ihre gesamte Länge parallel zueinander verlaufen.

13. Führungsschiene nach Anspruch 11,
**dadurch gekennzeichnet, dass**
eine der Führungsspuren durch einen elastisch auslenkbaren Abschnitt (454e) begrenzt ist, der so angeordnet ist, dass er durch den zugeordneten Führungskörper (444b) auslenkbar ist.

14. Führungsschiene nach Anspruch 11,
**dadurch gekennzeichnet, dass**
eine der Führungsspuren (254c) einen aufgeweiteten Abschnitt (254d; 354d) aufweist, vorzugsweise an einem Ende der Führungsspur (254c).

15. Führungsschiene nach dem Oberbegriff von Anspruch 10,
**dadurch gekennzeichnet, dass**
die Führungsschiene (550) einen elastisch auslenkbaren Abschnitt (550e) aufweist, der so angeordnet ist, dass der erste Führungskörper im Bereich des auslenkbaren Abschnitts (550e) gegen eine Federkraft um eine senkrecht zu einer Erstreckungsrichtung der ersten Führungsspur verlaufende Drehachse (2) drehbar ist.

16. Fahrzeug mit einem Heckstauraum(12), wobei im Heckstauraum ein Abdeckungssystem vorgesehen ist,
**dadurch gekennzeichnet, dass**
das Abdeckungssystem nach einem der Ansprüche 1 bis 9 ausgebildet ist.

17. Fahrzeug nach Anspruch 16,
**dadurch gekennzeichnet, dass**
das Abdeckungssystem so angeordnet ist, dass das weitgehend formstabile Abschlussflächenelement (40) in seiner oberen Endlage im Berührkontakt mit einer Heckraumklappe (14) des Fahrzeugs ist.
